# EUROPEAN PATENT APPLICATION

(11) **EP 4 664 233 A1**
(43) Date of publication of application: **17.12.2025**
(21) Application number: 25181190.7
(22) Date of filing: 05.06.2025
(51) Int. Cl.: G06F 1/08, G06F 1/14, G06F 11/30, G06F 11/07

(54) **OVERCLOCKING DETECTION AND RESPONSE**

(30) Priority: 14.06.2024 IN 202441045958
(71) Applicant: NXP USA, Inc., Austin, TX 78735 (US)
(72) Inventor: Marshall, Ray Charles, 5656AG Eindhoven (NL); Luedeke, Thomas Henry, 5656AG Eindhoven (NL); Gergen, Joseph Paul, 5656AG Eindhoven (NL); Satsangi, Mohit, 5656AG Eindhoven (NL); Fullerton, Mark Norman, 5656AG Eindhoven (NL)
(74) Representative: Miles, John Richard

(57) **Abstract**

Systems and methods for overclocking detection and response are discussed. In some embodiments, a device may include a Clock Monitoring Unit (CMU) and a control circuit coupled to the CMU, the control circuit configured to: upon initialization, determine a maximum allowed frequency based, at least in part, upon information stored in a One-Time Programmable (OTP) memory; and provide an indication of the maximum allowed frequency to the CMU, wherein the CMU is configured to detect overclocking based, at least in part, upon a comparison between a frequency of a clock signal and the maximum allowed frequency.

## Description

### Field

This disclosure relates generally to electronic circuits, and more specifically, to systems and methods for overclocking detection and response.

### Background

An Integrated Circuit (IC) is a set of electronic circuits fabricated on a piece of semiconductor material (e.g., silicon). With the advent of modem semiconductor manufacturing techniques, an ever-increasing number of miniaturized transistors and other electronic components can be integrated into a single electronic package or microchip. Nowadays, a System-on-Chip (SoC) may include most (or all) components of an entire computer or data processing system.

Phantom options in the context of SoCs refer to configurable features or components that are included in the design of the SoC but are not enabled or accessible in all models or variants. Generally, these options may be enabled through various methods such as software settings, firmware updates, or specific licensing agreements.

By designing a single SoC with phantom options, manufacturers can produce a single chip that caters to multiple market segments or product lines. This approach reduces the complexity and cost of manufacturing different SoCs for different purposes. Moreover, manufacturers can create product differentiation by enabling different sets of features on the same SoC. This allows them to sell the same hardware at different price points based on the features enabled, catering to both premium and budget segments. Having a single SoC that can be configured post-manufacturing also allows manufacturers to manage their inventory more efficiently.

In some SoCs, an important phantom option may include its maximum operating frequency. As the inventors hereof recognized, however this leaves room for customers to initially purchase a lower-cost variant of an SoC, and later attempt to increase the SoC's maximum operating frequency illegally-that is, without having purchased a phantom option upgrade.

### Brief Description of the Drawings

The present disclosure is illustrated by way of example and are not limited by the accompanying figures, in which like references indicate similar elements. Elements in the figures are illustrated for simplicity and clarity and have not necessarily been drawn to scale.
FIG. 1 is a block diagram showing an example of an electronic device, according to some embodiments.
FIG. 2 is a circuit diagram showing an example of a circuit for overclocking detection and response in an electronic device, according to some embodiments.
FIG. 3 is a flowchart showing an example of a method for overclocking detection and response in an electronic device, according to some embodiments.

### Detailed Description

A System-on-Chip (SoC) is a versatile and highly integrated electronic chip that combines many (or all) components of a computer or other electronic system onto a single, compact microchip. For example, some SoCs may include a Central Processing Unit (CPU), memory interfaces, Integrated Circuits (ICs) for managing data and connectivity, and sometimes even more specialized components like Graphics Processing Units (GPU) or network interfaces.

In various embodiments, at least in part to address the increased cost of creating separate physical devices for multiple SoC variants and the desire in the market to allow performance upgrades in-field, systems and methods described herein provide a flexible SoC "phantoming" strategy that supports maximum frequency increases after shipment and a corresponding protection against illegal frequency configuration by users, whether intentional or not.

These systems and methods provide mechanisms for detecting the overclocking of a clock signal based on the SoC's currently allowed or licensed maximum frequency specification, which is in tum based upon a phantom option. In various implementations, these systems and methods may be configured to respond to such a detection by providing an indication to software, disabling the functionality associated with this clock, resetting the SoC, etc.

As used herein, the term "overclocking" refers to a clock signal having a frequency greater than a maximum operating frequency. The overclocking may be deemed "illegal" if the clock signal has a frequency that meets or rises above a maximum allowed operating frequency that is indicated by a selected phantom option, which may be smaller than the greatest possible operating frequency of the SoC (or portion thereof).

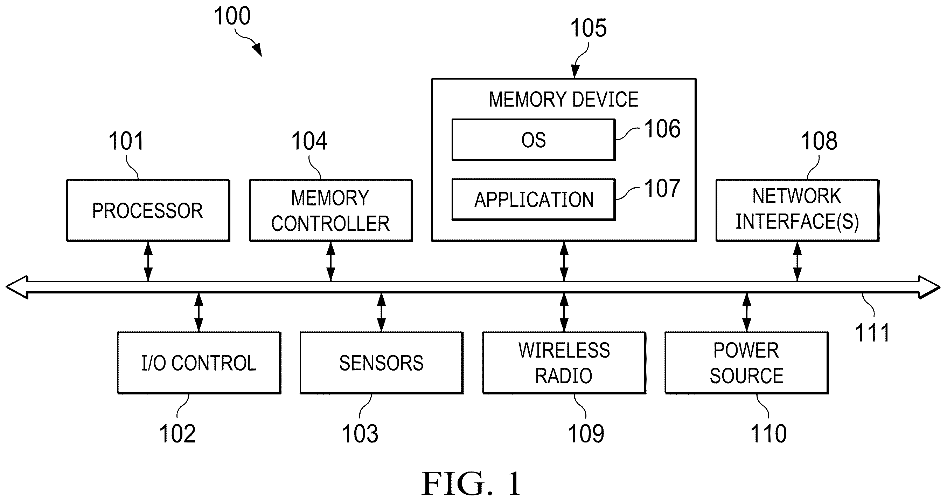

In that regard, FIG. 1 shows an example of electronic device 100 where overclocking detection and response may be implemented. In various embodiments, device 100 may be integrated with electronic circuitry, microprocessors, memory, input output (I/O) logic control, communication interfaces and components, as well as other hardware, firmware, or software. Moreover, one or more components of device 100 may be part of an SoC.

Device 100 includes processor 101 (e.g., a controller, a microcontroller, a digital signal processor, etc.) configured to execute program instructions stored in memory device 105 for implementing various systems and methods described herein. Processor 101 may include components of an integrated circuit, programmable logic device, a logic device formed using one or more semiconductors, and other implementations in silicon or hardware.

In some cases, processor 101 may include two units: (i) a low-power microprocessor, core, or domain, and (ii) a high-power microprocessor, core, or domain. The high-power microprocessor may execute computationally intensive operations, whereas the low-power microprocessor may manage simpler processes, such as detecting inputs from one or more sensors. The low-power processor may also wake or initialize the high-power processor for computationally intensive processes. More generally, processor 101 may include any number of such units or domains.

In device 100, data bus 111 couples its various components and enables data communication between those components. Data bus 111 may be implemented as any suitable combination of one or more bus structures or bus architectures. Device 100 also includes power source 110, such as a battery or an AC-DC power supply.

Sensors 103 may be implemented to detect various properties such as acceleration, temperature, humidity, water, supplied power, proximity, external motion, device motion, sound signals, ultrasound signals, light signals, fire, smoke, carbon monoxide, Global-Positioning-Satellite (GPS) signals, radio frequency (RF), other electromagnetic signals or fields, or the like. As such, sensors 103 may include any one or a combination of temperature sensors, humidity sensors, hazard-related sensors, other environmental sensors, accelerometers, microphones, optical sensors up to and including cameras (e.g., charged coupled-device or video cameras, active or passive radiation sensors, GPS receivers, and RF identification (ID) detectors).

Memory controller 104 and memory device 105 may implement any type of nonvolatile memory or other suitable electronic storage device. Device 100 may include various firmware or software, such as Operating System (OS) 106 maintained as computer executable instructions in memory 105 and executed by processor 101. Moreover, application 107 may include a distance estimation application that implements various aspects of the systems and methods described herein.

Input-output (I/O) control 102 may be configured to receive input from a user or provide information to the user. For example, I/O control 102 may also include mechanical or virtual components that respond to a user input. For example, the user can mechanically move a sliding or rotatable component, or the motion along a touchpad may be detected, and may correspond to a setting of device 100.

Device 100 includes network interfaces 108, such as a mesh network interface for communication with other devices in a wireless mesh network, and an external network interface for network communication, such as via the Internet. Wireless radio system 109 may be used for wireless communication with other devices via network interface 108 and for multiple, different wireless communications systems. For instance, radio system 109 may include a radio device, antenna, and chipset implemented for any given wireless communications technology, such as, for example, Wi-Fi, BLUETOOTH, Mobile Broadband, BLE, point-to-point IEEE 802.15.4, etc.

In various embodiments, systems and methods described herein may include deploying a Clock Monitoring Unit (CMU) within an SoC component of electronic device 100. The CMU may be configured to compare a clock signal's frequency against a configurable maximum based on a reference, and in response to the signal being greater than the configurable maximum, identifying an overclocking event.

As such, these systems and methods may implement one or more of the following overclocking detection and response mechanisms: (a) configuring a CMU based on a currently maximum licensed or "legal" frequency in such a way that cannot be altered by actors downstream from the manufacturer of an SoC; (b) providing software indications of an overclocking event using an SoC's interrupt infrastructure; (c) disabling an overclocked clock signal so that it cannot be used with an "illegal" configuration; or (d) preventing the entire SoC from being corrupted or hanging when a clock signal is disabled using an SoC's safety infrastructure.

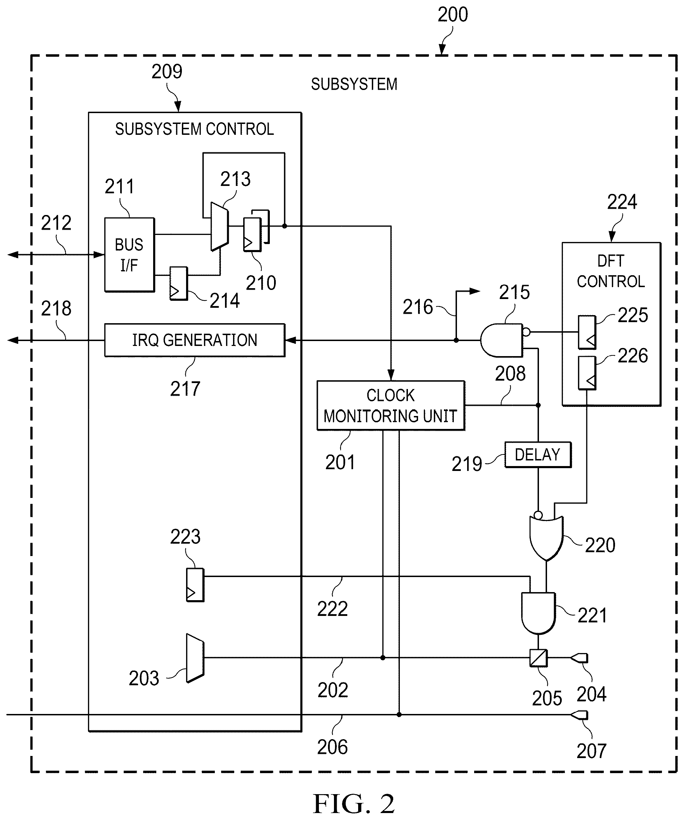

In that regard, FIG. 2 is a circuit diagram showing an example of a circuit for overclocking detection and response in electronic device 100. Particularly, the circuit may include subsystem IC 200 disposed within any SoC comprising any of the components shown in FIG. 1 (e.g., processor 101).

As shown, subsystem IC 200 includes subsystem control 209 and Design for Testing (DFT) control 224. CMU 201 may be configured to receive one or more clock signals 202 to be monitored via selector or multiplexer (MUX) 203 of subsystem control 209. In some implementations, two or more CMUs 201 may be used, each CMU 201 configured to monitor a different set of clock signal(s).

In this case, MUX 203 may be used by subsystem control 209 to select any of a plurality of different clock signals, where each clock signal is provided to a distinct clock domain in the SoC (e.g., different processing cores or portions thereof). In this case, clock signal 202 to be monitored is coupled to processing core or clock domain 204 via switch 205.

If an SoC's phantom options limits the legal maximum frequency for a clock domain to a frequency below the maximum specified frequency of the underlying device, CMU 201 may detect an "illegal" clock configuration that results in a frequency that is higher than allowed for that phantom, whether it was intentional or unintentional.

In response to an overclock detection event, CMU 201 may output over-frequency fault indication 208 (*e.g.,* flag, bit, or signal). Over-frequency fault indication 208 is coupled to delay circuit 219 and to a non-inverting input of NAND gate 215. Over-frequency fault indication 208 is also coupled to local fault handling circuit 216 and interrupt (IRQ) generator circuit 217.

As illustrated, delay circuit 219 is coupled to an inverting input of OR gate 220. In some cases, delay circuit 219 may be programmable (e.g., by a secure core). An inverting input of NAND gate 215 is coupled to register or flip-flop 225, and a non-inverting input of OR gate 220 is coupled to register or flip-flop 226 of DFT control 224.

The output of OR gate 220 is coupled to a first input of AND gate 221, and an output of register or flip-flop 223 provides clock enable signal 222 to the second input. The output of AND gate 221 is coupled to switch 205, therefore configured to enable or disable clock signal 202 to be provided to core 204 under control of CMU 201.

In some embodiments, CMU 201 may operate based on allowed detected clock edges within a monitor time window, which in turn may be based on the frequency of a constant and non-tamperable clock source 206, such as an internal oscillator (as opposed to an external crystal). An example of non-tamperable clock source 206 is an SoC's safe clock, here coupled to fault handler 207.

CMU 201 may be configured solely via registers or flip-flops 210 accessible exclusively by a secure core within SoC via bus interface 211, which communicates subsystem control 209 with the central interconnect 212 (e.g., an SoC implementation of bus 111). The secure core may run secure code that cannot be tampered with. As such, the secure core may be safely and exclusively used to configure an upper frequency limit of CMU 201, and to enable or disable overclock monitoring operations, via registers 210.

Registers 210 may be written by the secure core during the system or subsystem initialization based on values contained in a manufacturer-only accessible fuse bits, or the like. Once registers 210 have been written, the secure core writes to a write-once lock bit 214 that controls MUX 213 to prevent registers 210 from being overwritten until a subsequent initialization.

In operation, once CMU 201 is configured and operational, it may perform one or more responsive actions following an overclock detection event, such as, for example: (a) report a fault to local fault handler 216 (may include corresponding local safety-related interrupt request), (b) generate an interrupt request via IRQ generation circuit 217 to a system manager or central interrupt controller 218, or (c) gating off a corresponding clock domain via switch 205 after a time delay provided by delay circuit 219.

Particularly, upon receiving over-frequency fault indication 208, local fault hander fault reporting and its corresponding local interrupt request gives the SoC's software/firmware the chance to apply a fence and drain to the affected functionality via the SoC's existing safety mechanisms before the clock gating delay 219 duration has expired and the clock 202 is ultimately gated off via switch 205.

IRQ generator 217 may allow the SoC's software/firmware to be able to identify a reason for a clock domain being gated off as being an 'illegal' clock configuration, and may also take corrective action (i.e., change the clock configuration to a legal one by reducing its maximum operating frequency).

Moreover, to support various production test modes (e.g., at the SoC's factory), DFT controller 224 may use registers or flip-flop 225 and 226, which may be writable only when electronic device 100 is placed specific test modes (and not during its regular operations), to mask clock gating due to over-frequency fault 208 being reported to: fault handler 206 (through register 226), or IRQ generator 217 (through register 225).

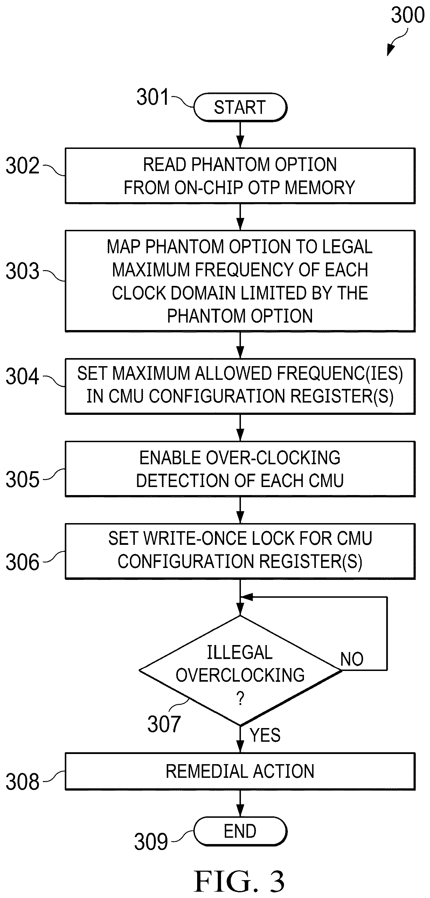

FIG. 3 is a flowchart showing an example of method 300 for overclocking detection and response in electronic device 100. In various embodiments, method 300 may be performed, at least in part, by components of subsystem 200.

Particularly, method 300 begins at 301 when subsystem 200 (or the full system) is initialized. After every full-chip reset, a secure core (e.g., a boot core) may execute various operations from ROM. For example, at 302, method 300 may read a phantom option stored in one or more fuse bits or other on-chip, One Time Programmable (OTP) memory (e.g., by the secure core) or Non-Volatile Memory (NVM). At 303, method 300 may map the phantom option to a legal maximum frequency of each clock domain limited by the phantom option, for example, using a non-tamperable Look-Up Table (LUT), or the like.

At 304, method 300 may set a maximum allowed frequency in each corresponding configuration register 210, and at 305 method 300 may enable overclock detection by CMU 201. Then, at 306, method 300 may set a corresponding write-once lock 214 for CMU configuration registers 210.

At 307, CMU 201 monitors clock signal 202 against the maximum allowed frequency for a corresponding core or clock domain 204, or for multiple clock signals against maximum allowed frequencies for multiple corresponding cores or clock domains. If CMU 201 determines that the frequency of clock signal 202 meets or exceeds its maximum allowed frequency, it performs one or more of the aforementioned responsive actions at 308, before method 300 ends at 309.

For example, at 308, when over-clocking fault indication 208 reaches local fault handler 216, the core running local fault handler software may: disable the interfaces at the affected clock domain's (e.g., a core) boundary such that ongoing transactions are not corrupted (e.g., fence and drain), shut down the affected logic itself, inform the central the SoC software/firmware that the affected logic has been isolated, etc.

Additionally, or alternatively, at 308, when over-clocking fault indication 208 reaches IRQ generator 217, method 300 may issue an over-clocking fault interrupt to the core running SoC software/firmware (e.g., system manager). The system manager core may, in response, inform an external system of the illegal clock configuration, for example to allow a debugger or external fault manager to know that an illegal clock configuration has occurred (delay 219 may be configured to allow this operation), and the debugger may use this information to correct the clock configuration and reboot the SoC. Additionally, or alternatively, the system manager core may reset the SoC.

Accordingly, in various embodiments, systems and methods described herein may provide for secure SoC configuration of phantom options. The configuration for the CMU 201 may be stored in secure OTP fuses and copied into CMU 201 by a secure element. The CMU configuration is locked until the next system reset.

Additionally, or alternatively, these systems and methods may provide progressive responses to overclocking detection. For example, a first level response may include sending an interrupt to a local fault handler, a second level response may include sending an interrupt to an SoC's system manager, and a third level response may include, after a time delay to allow for an orderly shutdown, hold the CPU in reset.

The first level response may allow a CPU to be shut down in an orderly manner without corrupting the rest of the system. The second level response may inform an SoC's system manager that the CPU is about to be disabled due to an overclocking violation and it may log the fault.

Additionally, or alternatively, systems and methods described herein may provide in-field updates, such that a customer or user of electronic device 100 may purchase phantom option updates (e.g., a frequency upgrade or downgrade). For example, an over-the-air update may request a different maximum frequency. After secure authentication of the update request, a secure core or element of the SoC may blow additional secure fuses, such that from the next reset on, an updated maximum frequency will be available to CMU 201.

Moreover, these systems and methods may provide testing support though DFT control 224. During specific production testing life-cycle stages, the SoC may be tested to maximum possible operating frequency (even if the application frequency is ultimately limited by an inferior phantom option), thus allowing for a common and simplified test flow and full coverage for potential future in-field upgrades to higher frequencies.

In an illustrative, non-limiting embodiment, a device may include a CMU and a control circuit coupled to the CMU, the control circuit configured to: upon initialization, determine a maximum allowed frequency based, at least in part, upon information stored in an OTP memory; and provide an indication of the maximum allowed frequency to the CMU, where the CMU is configured to detect overclocking based, at least in part, upon a comparison between a frequency of a clock signal and the maximum allowed frequency.

The OTP memory may include a fuse exclusively accessible to an OEM of the. Moreover, the CMU may be inaccessible by software.

Upon the initialization the control circuit may write and lock the information in a configuration register coupled to the CMU. The CMU may be configured to: count a number of pulses of the clock signal during a time window based upon a reference clock signal; and calculate the frequency of the clock signal based upon the number of pulses and a duration of the time window.

The reference clock may be provided by an oscillator integrated into the device. The maximum allowed frequency may correspond to one of a plurality of clock domains configured to receive the clock signal.

The CMU may be configured to detect overclocking across a plurality of clock signals, where each different clock signal is provided to corresponding one of a plurality of clock domains, and where the detection is based upon a comparison between each clock signal and a corresponding one of a plurality of maximum allowed frequencies.

In response to the overclocking detection, the CMU may be configured to provide a flag to a fault handler executed by a processing core of the device. The fault handler may be configured to disable an interface of a clock domain associated with the clock signal in response to the flag. In response to the overclocking detection, the CMU may be configured to issue a flag to an interrupt controller.

The interrupt controller may be configured to notify a debugger of the overclocking detection in response to the flag. The debugger may be configured to at least one of: (i) correct the clock signal in response to the notification, or (ii) reset at least a portion of the device.

In response to the overclocking detection, the CMU may be configured to stop the clock signal from being provided to a respective clock domain. In response to the overclocking detection, the CMU may be configured to stop the clock signal after a time delay. The information may indicate a phantom option.

The OTP memory may include an area available to write other information indicative of another phantom option in response to a request by a customer to change the maximum allowed frequency. In response to successful authentication or verification of the request, the maximum allowed frequency may be increased.

In another illustrative, non-limiting embodiment, a chip may include: a CMU configured to detect overclocking based, at least in part, upon a comparison between a frequency of a clock signal and a maximum allowed frequency; and a control circuit coupled to the CMU, the control circuit configured to provide an indication of the maximum allowed frequency to the CMU based, at least in part, upon information stored in an OTP memory.

In yet another illustrative, non-limiting embodiment, a method may include identifying a maximum allowed frequency for a clock signal being provided to a clock domain of an SoC based, at least in part, upon an indication of a phantom option stored in an OTP memory of the SoC by a manufacturer of the SoC; and detecting an overclocking of the clock signal based, at least in part, upon a comparison between a current frequency of a clock signal and the maximum allowed frequency.

Systems and methods for overclocking detection and response are discussed. In some embodiments, a device may include a Clock Monitoring Unit (CMU) and a control circuit coupled to the CMU, the control circuit configured to: upon initialization, determine a maximum allowed frequency based, at least in part, upon information stored in a One-Time Programmable (OTP) memory; and provide an indication of the maximum allowed frequency to the CMU, wherein the CMU is configured to detect overclocking based, at least in part, upon a comparison between a frequency of a clock signal and the maximum allowed frequency.

In many implementations, systems and methods described herein may be incorporated into a wide range of electronic devices including, for example, computer systems or Information Technology (IT) products; consumer devices or appliances; scientific instrumentation; industrial robotics; medical or laboratory electronics; transportation vehicles such as automobiles, buses, trucks, trains, watercraft, aircraft, etc.; military equipment, etc.

For sake of brevity, conventional techniques have not been described in detail herein. Furthermore, the connecting lines shown in the various figures contained herein have been intended to illustrate relationships (e.g., logical) or physical couplings (e.g., electrical) between the various elements. It should be noted, however, that alternative relationships and connections may be used in other embodiments. Moreover, circuitry described herein may be implemented either in silicon or another semiconductor material or alternatively by software code representation thereof.

Although various systems and methods are described herein with reference to specific embodiments, modifications and changes may be made without departing from the scope of the present disclosure, as set forth in the claims below. Accordingly, the specification and figures are to be regarded in an illustrative rather than a restrictive sense, and all such modifications are intended to be included. Any benefits, advantages, or solutions to problems that are described herein regarding specific embodiments are not intended to be construed as a critical, required, or essential feature or element of any or all the claims.

Reference is made herein to "configuring" a device or a device "configured to" perform some operation(s). This may include selecting predefined logic blocks and logically associating them. It may also include programming computer software-based logic of a retrofit control device, wiring discrete hardware components, or a combination thereof. Such configured devices are physically designed to perform the specified operation(s).

Unless stated otherwise, terms such as "first" and "second" are used to arbitrarily distinguish between the elements such terms describe. Thus, these terms are not necessarily intended to indicate temporal or other prioritization of such elements. The terms "coupled" or "operably coupled" are defined as connected, although not necessarily directly, and not necessarily mechanically. The terms "a" and "an" are defined as one or more unless stated otherwise. The terms "comprise" (and any form of comprise, such as "comprises" and "comprising"), "have" (and any form of have, such as "has" and "having"), "include" (and any form of include, such as "includes" and "including") and "contain" (and any form of contain, such as "contains" and "containing") are open-ended linking verbs. As a result, a system, device, or apparatus that "comprises," "has," "includes" or "contains" one or more elements possesses those one or more elements but is not limited to possessing only those one or more elements. Similarly, a method or process that "comprises," "has," "includes" or "contains" one or more operations possesses those one or more operations but is not limited to possessing only those one or more operations.

## Claims

1. A device, comprising:
a Clock Monitoring Unit (CMU); and
a control circuit coupled to the CMU, the control circuit configured to:
upon initialization, determine a maximum allowed frequency based, at least in part, upon information stored in a One-Time Programmable (OTP) memory; and
provide an indication of the maximum allowed frequency to the CMU, wherein the CMU is configured to detect overclocking based, at least in part, upon a comparison between a frequency of a clock signal and the maximum allowed frequency.

2. The device of claim 1, wherein the OTP memory comprises a fuse exclusively accessible to an Original Equipment Manufacturer (OEM) of the device.

3. The device of any preceding claim, wherein the CMU is inaccessible by software.

4. The device of any preceding claim, wherein upon the initialization the control circuit writes and locks the information in a configuration register coupled to the CMU.

5. The device of any preceding claim, wherein the CMU is configured to:
count a number of pulses of the clock signal during a time window based upon a reference clock signal; and
calculate the frequency of the clock signal based upon the number of pulses and a duration of the time window.

6. The device of any preceding claim, wherein the reference clock is provided by an oscillator integrated into the device.

7. The device of any preceding claim, wherein the maximum allowed frequency corresponds to one of a plurality of clock domains configured to receive the clock signal.

8. The device of any preceding claim, wherein the CMU is configured to detect overclocking across a plurality of clock signals, wherein each different clock signal is provided to corresponding one of a plurality of clock domains, and wherein the detection is based upon a comparison between each clock signal and a corresponding one of a plurality of maximum allowed frequencies.

9. The device of any preceding claim, wherein in response to the overclocking detection, the CMU is configured to provide a flag to a fault handler executed by a processing core of the device.

10. The device of claim 9, wherein the fault handler is configured to disable an interface of a clock domain associated with the clock signal in response to the flag.

11. The device of any preceding claim, wherein in response to the overclocking detection, the CMU is configured to issue a flag to an interrupt controller.

12. The device of claim 11, wherein the interrupt controller is configured to notify a debugger of the overclocking detection in response to the flag.

13. The device of claim 12, wherein the debugger is configured to at least one of: (i) correct the clock signal in response to the notification, or (ii) reset at least a portion of the device.

14. The device of any preceding claim , wherein in response to the overclocking detection, the CMU is configured to stop the clock signal from being provided to a respective clock domain.

15. The device of claim 14, wherein in response to the overclocking detection, the CMU is configured to stop the clock signal after a time delay.
